# EUROPÄISCHE PATENTSCHRIFT

(11) **EP 0 551 840 B1**
(45) Veröffentlichungstag und Bekanntmachung des Hinweises auf die Patenterteilung: **09.04.1997**
(21) Anmeldenummer: 93100251.3
(22) Anmeldetag: 09.01.1993
(51) Int. Cl.: B60J 7/043, B60J 7/05

(54) **Schiebehebedach für Kraftfahrzeuge**
Sliding sunroof for motorvehicle
Toit coulissant pour véhicule automobile

(30) Priorität: 14.01.1992 DE 4200725
(43) Veröffentlichungstag der Anmeldung: 21.07.1993
(73) Patentinhaber: Rockwell International GmbH, 60314 Frankfurt (DE)
(72) Erfinder: Schlapp, Albert, W-6072 Dreieich (DE); Heindl, Ralf, Dipl.-Ing., W-8758 Goldbach (DE)
(74) Vertreter: Oppermann, Ewald, Dipl.-Ing.

(56) Entgegenhaltungen:
- EP-A- 0 244 110
- FR-A- 2 318 047
- GB-A- 2 202 580

## Beschreibung

Die Erfindung bezieht sich auf ein Schiebehebedach für Kraftfahrzeuge entsprechend dem Oberbegriff des Patentanspruchs 1. Die Erfindung ist auch für ein Aufsatzschiebehebedach verwendbar und weiter unten für eine solche auf die feste Dachfläche eines Kraftfahrzeugs aufgesetzte Dachkonstruktion beschrieben.

Bei einem derartigen bekannten Schiebehebedach (EP-A-0 244 110) ist ein Mitnehmerstift vorgesehen, der einerseits über ein in der Kabelführung laufendes Teil fest mit dem angetriebenen Kabel verbunden ist und andererseits drehbar in eine Bohrung eines zylindrischen Führungskörpers eingreift. Dieser Führungskörper versieht die Funktion des hinteren Führungsschuhs und ist in der Führungsschiene verschiebbar. Zugleich dient der Führungskörper als Schwenklager für den Steuerhebel. In den Führungsschlitz der Führungskulisse greift ein zusätzlicher Stift ein, der etwa in der Mitte des Steuerhebels angebracht ist. Aufgrund dieser Anordnung nimmt der Steuerhebel in der Schließlage des Schiebedeckels eine schräggestellte Position ein, die eine erhebliche Bauhöhe der Schiebehebedachkonstruktion erforderlich macht. Größere Bauhöhen sind jedoch unerwünscht, weil sie die Kopffreiheit der Fahrzeuginsassen beschränken, wenn es sich um eine in die feste Dachfläche eingebaute Schiebehebedachkonstruktion handelt, und weil sie zu weit über die feste Dachfläche nach oben vorstehen, wenn es sich um eine auf die feste Dachfläche aufgesetzte Dachkonstruktion handelt.

Weiterhin ist bei dem bekannten Schiebehebedach zur Schwenklagerung des Steuerhebels an der Führungskulisse ein im Durchmesser kleiner Stift am freien Ende des Steuerhebels vorgesehen, der sich in der zweiten Phase der Ausstellbewegung bzw. in der ersten Phase der entgegengesetzten Bewegung in dem Ende des zugeordneten Führungsschlitzabschnitts dreht. Zwischen Führungsschlitz und Stift besteht dabei aber so viel Bewegungsspiel, daß dem ausgestellten Schiebedeckel kein sicherer schwingungsfreier Stand ermöglicht wird, zumal der maximal ausgestellte Schiebedeckel nur gegen den Widerstand einer Feder nach oben angehoben werden kann, wobei sich der am freien Ende des Steuerhebels befindliche Stift in dem zugeordneten Führungsschlitzabschnitt nach unten verlagert.

Der Erfindung liegt die Aufgabe zugrunde, hier Abhilfe zu schaffen und ein Schiebehebedach der im Oberbegriff des Patentanspruchs 1 angegebenen Gattung mit einer Ausstellmechanik für den Schiebedeckel vorzuschlagen, welche dem Schiebedeckel auch bei seinem maximalen Ausstellwinkel einen sicheren und schwingungsfreien Stand verschafft und welche in der Schließlage des Schiebedeckels nur eine vergleichsweise geringe Einbauhöhe beansprucht.

Die gestellte Aufgabe wird durch die Merkmale des Patentanspruchs 1 gelöst. Vorteilhafte Aus- und Weiterbildungen der Erfindung sind in den Unteransprüchen 2 bis 4 angegeben und nachstehend ebenfalls erläutert.

Bei der erfindungsgemäßen Anordnung ist am Steuerhebel kein mittlerer Führungsstift vorgesehen, so daS der Steuerhebel in der Schließlage des Schiebedeckels etwa waagerecht liegt und nur eine geringe Einbauhöhe beansprucht. Dabei bilden die Führungsstifte zugleich die Anlenkpunkte für die Steuerhebel an den hinteren Führungsschuhen. Für die dreh- und verschiebbare Verbindung zwischen den Führungskulissen und den Steuerhebeln ist eine ebenso einfache wie funktionssichere Ausbildung angegeben. Wesentlich für diese Verbindung ist die in der zylindrischen Lageröffnung der Führungskulisse mit nur geringem Spiel drehbare Lagerscheibe, die einen vergleichsweise großen Durchmesser aufweist und in welcher der Führungsvorsprung des Steuerhebels unverdrehbar Aufnahme findet.

Im Anspruch 2 ist angegeben, wie diese unverdrehbare Aufnahme zweckmäßig herbeigeführt werden kann.

Die Aufhebung des Führungseingriffs zwischen dem Führungsstift und dem ersten Abschnitt des Führungsschlitzes am Ende der ersten Phase der Ausstellbewegung bzw. die Wiederherstellung des Führungseingriffs zwischen dem Führungsstift und dem ersten Abschnitt des Führungsschlitzes zu Beginn der zweiten Phase der Einschwenkbewegung wird vorteilhaft durch die im Anspruch 3 angegebenen Maßnahmen ermöglicht.

Im Anspruch 4 ist angegeben, durch welche Maßnahmen bei ausgestelltem Schiebedeckel dem Spiel zwischen den miteinander eingreifenden Antriebselementen im Interesse einer Unterdrückung von Klappergeräuschen zusätzlich entgegengewirkt werden kann.

Ein Ausführungsbeispiel, das die Anwendung der Erfindung bei einem Aufsatzschiebehebedach betrifft, wird nachfolgend anhand der Zeichnungen näher erläutert. Darin zeigt:
- Fig. 1: die abgebrochene Draufsicht auf ein Kraftfahrzeugdach mit daran angebrachtem Aufsatzschiebehebedach bei in Schließstellung befindlichem Schiebedeckel,
- Fig. 2 bis 5: Schnittansichten entlang der Linien II-II bis V-V in Fig. 1,
- Fig. 6 bis 9: in ab- und aufgebrochenen unterschiedlichen Draufsichten Sperrelemente für die Verhinderung unerwünschter Schiebebewegungen des Schiebedeckels, dargestellt für verschiedene Deckelstellungen,
- Fig. 10: die ab- und aufgebrochene Draufsicht auf einen hinteren Führungsschuh und eine zugeordnete Führungskulisse,
- Fig. 11: eine abgebrochene Schnittansicht entlang der Linie XI-XI in Fig. 10 bei ausgeschwenktem Schiebedeckel,
- Fig. 12: eine der Fig. 11 ähnliche Schnittansicht bei geschlossenem Schiebedeckel,
- Fig. 13: eine den Fig. 11 und 12 ähnliche Schnittansicht bei zur Öffnungsverschiebung angehobenem Schiebedeckel,
- Fig. 13a: eine der Fig. 13 ähnliche Schnittansicht bei zur Öffnungsverschiebung abgesenktem Schiebedeckel eines (nicht aufgesetzten) Schiebehebedaches,
- Fig. 14: eine abgebrochene Schnittansicht entlang der Linie XIV-XIV in Fig. 11,
- Fig. 15: eine abgebrochene Schnittansicht entlang der Linie XV-XV in Fig. 1 und
- Fig. 16: eine vergrößerte Schnitteinzelheit entsprechend dem Ausschnittskreis XVI in Fig. 15.

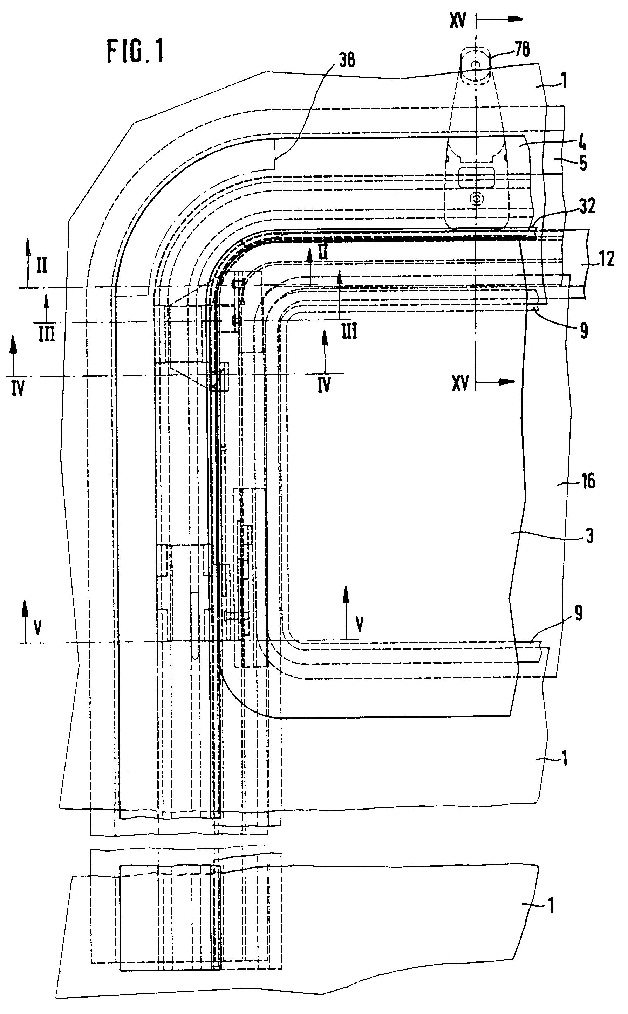

Auf die feste Dachfläche 1 einer Kraftfahrzeugkarosserie ist eine Schiebehebedacheinheit aufgesetzt. In der Dachfläche 1 befindet sich eine Dachöffnung 2, die mit einem Schiebedeckel 3 verschließbar ist, der als Glasdeckel ausgeführt ist, jedoch auch aus einem Metall oder Kunststoff gebildet sein kann. Der Schiebedeckel 3 überlappt in seiner in Fig. 1 dargestellten Schließstellung die Dachöffnung 2 allseits und ist zur Freigabe der Dachöffnung 2 über die hintere feste Dachfläche 1 verschiebbar. Der Schiebedeckel 3 ist vorn und seitlich von einem Außenrahmen 4 umgeben, an dem der Schiebedeckel 3 auf noch zu erläuternde Weise geführt ist und der als Montagerahmen der vormontierten Schiebehebedacheinheit dient. Der Aussenrahmen 4 ist nach hinten offen (Fig. 1) und erstreckt sich mit seinen seitlichen Schenkeln über den gesamten Öffnungsverschiebeweg des Schiebedeckels 3. Unterhalb der festen Dachfläche 1 ist ein dem Außenrahmen 4 gegenüberliegender Gegenrahmen 5 angebracht, der mit dem Außenrahmen 4 durch Schrauben 6 unter Zwischenlage eines Dichtstreifens 7 zwischen dem Außenrahmen 4 und der Dachfläche 1 fest verbunden ist. Der Gegenrahmen 5 umgibt die Dachöffnung 2 ebenfalls an drei Seiten und ist mit seinen freien Enden auch nach hinten gerichtet, wobei die Länge der seitlichen Schenkel der Länge der seitlichen Schenkel des Außenrahmens 4 angepaßt ist.

Die feste Dachfläche 1 ist an der Dachöffnung 2 mit einer umlaufend gleichen Aufkantung 8 versehen, auf welche ebenfalls umlaufend ein über seine gesamte Länge gleichbleibend ausgebildetes Abdichtprofil 9 aufgesteckt ist, das dem geschlossenen Schiebedeckel 3 von unten unter Herbeiführung einer umfänglichen Abdichtung der Dachöffnung 2 anliegt. Das Abdichtprofil ist in seinem oberen dem Schiebedeckel 3 zugekehrten Bereich mit einer seine Flexibilität erhöhenden Hohlkammer 10 versehen.

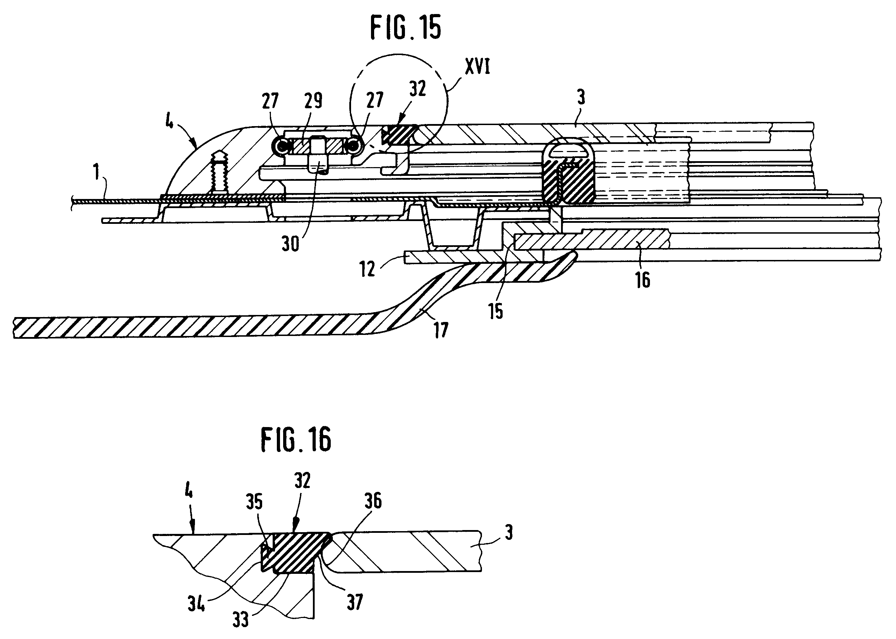

Der Gegenrahmen 5 ist im gezeigten Beispiel aus Blech profiliert und weist über seine gesamte Länge durchgehend ein gleichbleibendes Profil auf. In der Nähe seines Innenrandes befindet sich eine nach unten vorspringende Sicke 11, an welcher ein die Dachöffnung 2 ebenfalls an drei Seiten umgebender und mit seinen Enden nach hinten gerichteter Führungsrahmen 12 durch Klips 13 od.dgl. befestigt ist, welcher an seiner Innenseite mit einer nach oben zur Anlage an die feste Dachfläche 1 bestimmten Vorsprungsleiste 14 versehen ist, die etwa mit der Aufkantung 8 der Dachfläche 1 bündig liegt. Weiterhin ist der Führungsrahmen 12 in seiner gesamten Länge mit einer nach innen gerichteten Führungsnut 15 versehen, in welcher die seitlichen Ränder einer verschiebbaren Sonnenschutzplatte 16 geführt sind. Ist die Sonnenschutzplatte 16 zur vollständigen Abdeckung der Dachöffnung 2 ganz nach vorn geschoben, wie das in Fig. 15 angedeutet ist, so ist ihr vorderer Rand in das vordere Querteil der Führungsnut 15 eingeschoben. Wenn der Schiebedeckel 3 aus Metall hergestellt ist, kann auf eine Sonnenschutzplatte 16 verzichtet werden. Die Innenseite der Dachfläche 1 einschließlich des Gegenrahmens 5 und des Führungsrahmens 12 ist durch eine den oberen Fahrzeuginnenraum auskleidende Himmelschale 17 abgedeckt, die einen etwa der Dachöffnung 2 entsprechenden Ausschnitt aufweist.

Der Außenrahmen 4 ist einteilig mit integrierten Führungsschienen ausgebildet und weist einen nach unten und innen offenen Profilkanal 18 auf, von welchem zwei nebeneinander angeordnete und die Führungsschienen bildende Führungsnuten 19 und 20 ausgehen. Die Führungsnuten 19 und 20 haben einen geringen Höhenversatz, so daß unterhalb eines die Führungsnut 20 nach unten begrenzenden Profilflansches 21 ein seitlicher Durchtrittsspalt 22 zwischen der Dachfläche 1 und dem Profilflansch 21 für den Durchgriff der noch zu beschreibenden Führungsteile für den Schiebedeckel 3 gebildet ist. In den Führungsnuten 19 und 20 sind zu beiden Seiten des Schiebedeckels 3 jeweils ein vorderer Führungsschuh 23 und ein hinterer Führungsschuh 24 verschiebbar geführt.

Weiterhin befinden sich in dem Außenrahmen 4 oberhalb der Führungsnuten 19 und 20 für die Führungsschuhe 23 und 24 zwei nebeneinander angeordnete Führungskanäle 25 und 26 für darin drucksteif verschiebbar geführte und flexible Antriebskabel 27. An jeder Deckelseite ist eines der Antriebskabel 27 über einen Mitnehmer 28 kraftschlüssig mit einem hinteren Führungsschuh 24 verbunden. Die Führungskanäle 25 und 26 öffnen sich schlitzförmig zum Profilkanal 18 hin, so daß die Mitnehmer 28 durch die schlitzförmigen Öffnungen hindurch an die jeweiligen Antriebskabel 27 angreifen können. Im vorderen Querteil des Außenrahmens 4 ist im Bereich zwischen den beiden Antriebskabeln 27 ein Antriebsritzel 29 drehbar gelagert. Die Antriebskabel 27 sind in der für Kabelantriebe dieser Art üblichen Weise mit einer schraubenförmigen Drahtumfangswicklung versehen, welche zahnstangenähnlich mit der Verzahnung des Antriebsritzels 29 eingreift, so daß Drehungen des Antriebsritzels 29 jeweils Verschiebungen der Antriebskabel 27, der damit verbundenen hinteren Führungsschuhe 24 und der damit verbundenen noch näher zu erläuternden Funktionsteile bewirken. Wie aus Fig. 15 weiterhin hervorgeht, ist mit dem Antriebsritzel 29 eine Antriebswelle 30 drehfest verbunden, die zu einer hand- oder motorbetätigten Antriebsvorrichtung führt.

Der Außenrahmen 4 ist an seinem Außenumfang zur festen Dachfläche 1 hin nach außen zu abgeschrägt bzw. angerundet, um einen strömungsgünstigen Übergang zur Dachfläche 1 zu bilden.

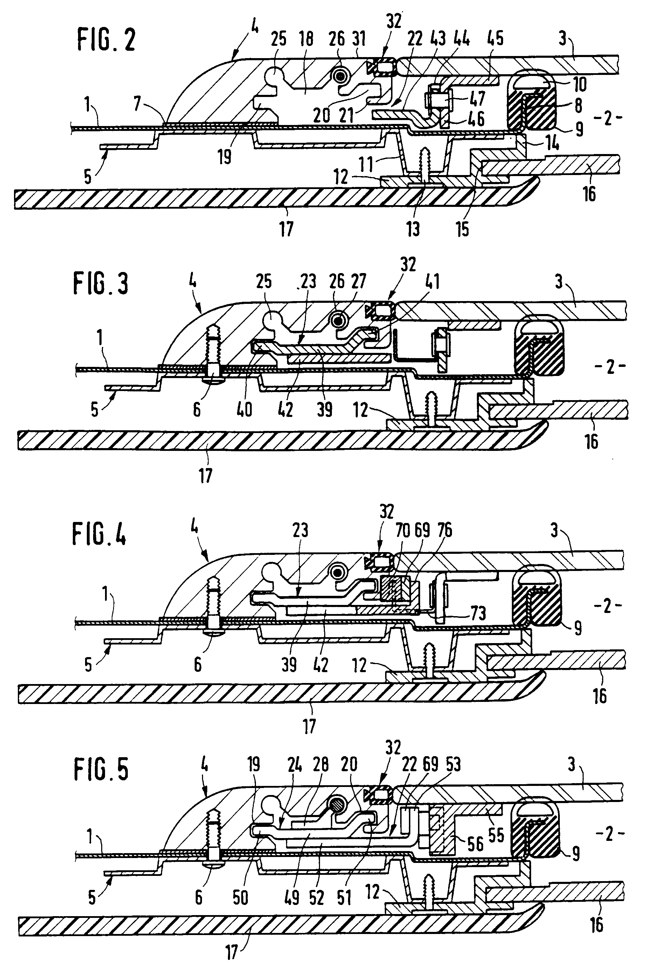

Der Außenrahmen 4 liegt mit seiner oberen Fläche 31 unter Zwischenlage einer Randspaltabdichtung 32 mit der oberen Fläche des Schiebedeckels 3 bündig. Dadurch erhält das Aufsatzschiebedach eine völlig glatte Außenform. Die Randspaltabdichtung umgibt den Deckel in seiner Schließlage an seinem vorderen und an seinen beiden Seitenrändern und erstreckt sich darüberhinaus über die volle Länge der seitlichen Schenkel des Außenrahmens 4. Zur Anbringung der Randspaltabdichtung 32 ist an der oberen Innenkante des Außenrahmens 4 eine Aufnahmenut 33 vorgesehen. In der senkrechten die Aufnahmenut 33 bildenden Fläche ist eine hinterschnittene Befestigungsnut 34 zur Aufnahme eines schwalbenschwanzförmigen Befestigungsvorsprungs 35 der Randspaltabdichtung 32 vorgesehen. Im Bereich der seitlichen Schenkel des Außenrahmens 4 ist die Randspaltabdichtung 32 als Hohlkammerprofil ausgebildet, wie aus den Fig. 2 bis 5 hervorgeht. Im Bereich des vorderen Querteils des Außenrahmens 4 ist die Randspaltabdichtung 32 dagegen ohne Hohlkammer als Vollprofil ausgebildet, so daß in diesem Bereich die elastische Verformbarkeit der Randspaltabdichtung 32 herabgesetzt ist. Weiterhin ist an diesem vorderen Bereich der Randspaltabdichtung 32 eine der abgerundeten Vorderkante 36 des Schiebedeckels 3 zugeordnete Schrägfläche 37 an dem Vollmaterialprofil vorgesehen. Wenn der Schiebedeckel 3 bei seiner Schließverschiebung auf diese Schrägfläche 37 auftrifft, so wird er dadurch geringfügig nach unten verlagert und damit dem Abdichtprofil 9 angepreßt. Wird der Schiebedeckel 3 mit seiner Hinterkante nach oben verschwenkt, wird die Vorderkante 36 entlang der Schrägfläche 37 nach unten geführt, wodurch eine Spaltbildung zwischen dem Außenrahmen 4 und der Deckelvorderkante 36 verhindert wird.

Der einteilige U-förmige Außenrahmen 4 kann zur Biegeerleichterung an seinen beiden vorderen Ecken mit Ausschnitten 38 versehen sein, von denen der linke vordere Ausschnitt in Fig.1 strichpunktiert angedeutet ist. Die Ausschnitte 38 sind durch nach dem Biegen angebrachte Formeinsätze geschlossen.

Für die nähere Erläuterung der Führungs- und Funktionsteile für den Schiebedeckel 3 wird entsprechend den beigefügten Zeichnungen ausschließlich auf die in Fahrtrichtung gesehen linke Seite des Schiebehebedaches Bezug genommen, weil die rechte Seite spiegelbildlich dazu ausgeführt ist.

Der vordere Führungsschuh 23 besitzt eine Führungsplatte 39 mit nach oben und außen abgebogenen Führungsvorsprüngen 40 und 41, welche verschiebbar in die zugeordneten Führungsnuten 19 bzw. 20 eingreifen. Die Führungsvorsprünge 40 und 41 können zur Reibungsminderung mit Gleitschuhen aus Kunststoff versehen sein (nicht dargestellt). Die Führungsplatte 39 ist fest mit einer unterlegten Grundplatte 42 verbunden, die an ihrem vorderen Ende mit einem Schwenklagervorsprung 43 den Durchtrittsspalt 22 berührungsfrei durchgreift und unterhalb des Schiebedeckels 3 mit einem senkrechten Lagerschenkel 44 endet. In diesem Bereich ist in der Nähe der Deckelvorderkante und mit Abstand von der Deckellängskante ein vorderer Deckelträger 45 mit der Unterseite des Schiebedeckels 3 beispielsweise durch Kleben fest verbunden. Der Deckelträger ist winkelförmig ausgebildet und ist mit einem nach unten weisenden Schenkel 46 über einen Schwenklagerzapfen 47 mit dem Lagerschenkel 44 schwenkbar verbunden, wie aus Fig. 2 hervorgeht. Die Schwenklagerzapfen 47 auf der linken und der rechten Seite des Schiebedeckels 3 bilden eine quer zur Schieberichtung verlaufende Schwenklagerachse für den Schiebedeckel 3.

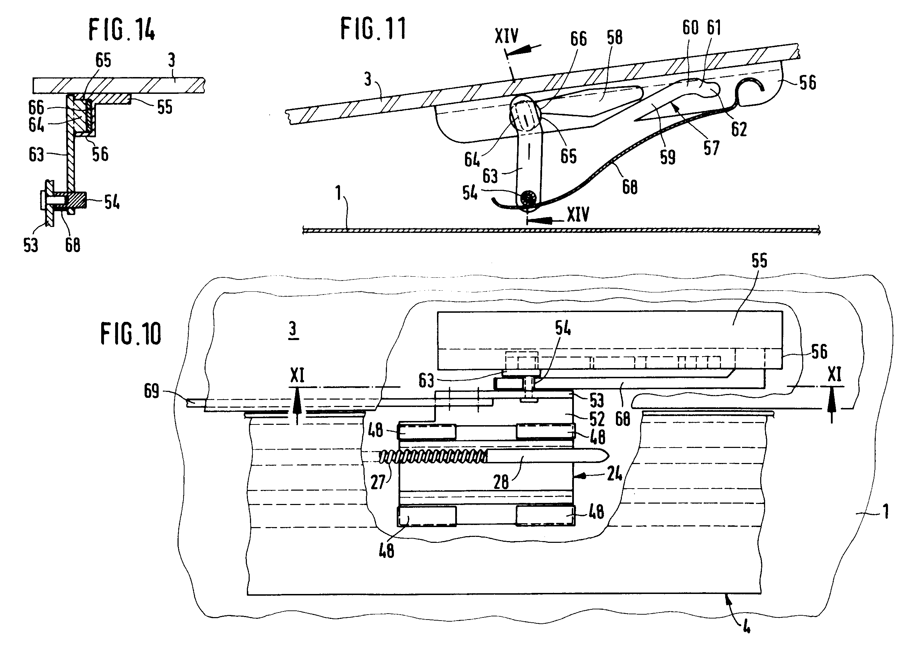

Wie aus Fig. 5 im Vergleich mit den Fig. 3 und 4 hervorgeht, ist der hintere Führungsschuh 24 dem vorderen Führungsschuh 23 entsprechend ausgebildet und besitzt ebenfalls eine Führungsplatte 49, die nach oben und außen zu Führungsvorsprüngen 50 und 51 abgebogen ist, welche verschiebbar in den zugeordneten Führungsnuten 19 bzw. 20 geführt sind. Auch hierbei können die Führungsvorsprünge 50 und 51 zur Reibungsherabsetzung mit Gleitschuhen 48 (Fig. 10) aus Kunststoff versehen sein. Mit der Führungsplatte 49 ist der bereits erwähnte Mitnehmer 28 fest verbunden. Auch hier ist die Führungsplatte 49 fest mit einer ihr unterlegten Grundplatte 52 verbunden. Die Grundplatte 52 greift durch den Durchtrittsspalt 22 berührungsfrei hindurch und endet unterhalb des Schiebedeckels 3 mit einer senkrecht nach oben gebogenen Befestigungsleiste 53. An dieser Befestigungsleiste 53 ist ein Führungsstift 54 befestigt.

In der Nähe der Deckelhinterkante und mit Abstand zur Deckellängskante befindet sich ein hinterer Deckelträger 55, welcher wiederum winkelförmig ausgebildet und an der Unterseite des Deckels durch zum Beispiel Kleben befestigt ist. Sein nach unten gerichteter Schenkel ist als Führungskulisse 56 ausgebildet, die auf noch zu beschreibende Weise mit dem Führungsstift 54 eingreift. Zur näheren Erläuterung der Führungskulisse und der mit ihr in Verbindung stehenden Teile wird nunmehr auf die Fig. 10 bis 14 Bezug genommen.

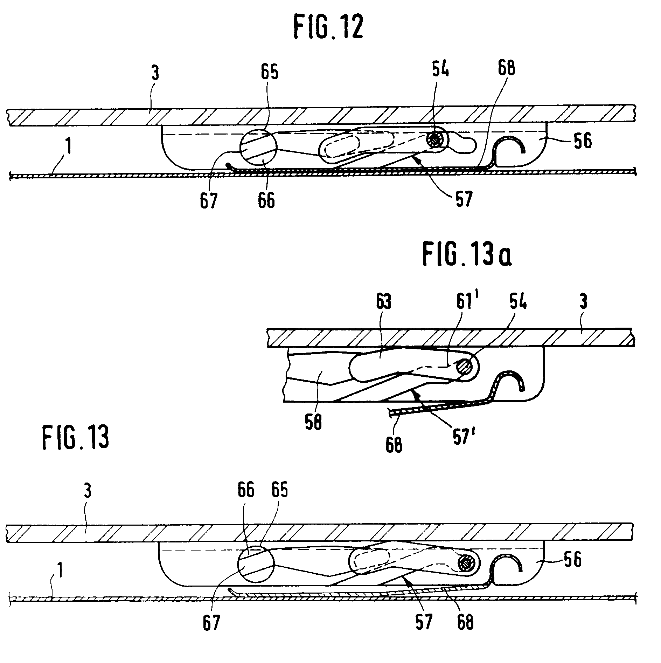

Wie am deutlichsten aus Fig. 11 hervorgeht, sind in der Führungskulisse 56 benachbart und teilweise überlappend hinten ein Führungsschlitz 57 für den Eingriff mit dem Führungsstift 54 und vorn eine langgestreckte besonders geformte Ausnehmung 58 vorgesehen. Der Führungsschlitz 57 umfaßt im wesentlichen vier Abschnitte, nämlich einen längeren gegenüber dem Schiebedeckel 3 von vorn nach hinten ansteigenden ersten geradlinigen Abschnitt 59, einen daran nach hinten gerichtet anschließenden kurzen etwa parallel zum Schiebedeckel 3 verlaufenden zweiten Abschnitt 60, einen daran anschließenden kurzen schräg nach unten gerichteten dritten Abschnitt 61 und einen kurzen daran nach hinten gerichtet anschließenden zum Schiebedeckel parallelen vierten Abschnitt 62. Der erste Abschnitt 59 ist der Ausstellbewegung des Schiebedeckels zugeordnet, der zweite Abschnitt 60 entspricht der Schließlage des Schiebedeckels 3, der dritte Abschnitt 61 ist einer vertikalen Verlagerung der Deckelhinterkante in Aufwärtsrichtung zugeordnet, und der vierte Abschnitt 62 schließlich nimmt den Führungsstift 54 bei der Öffnungsverschiebung des mit seiner Hinterkante etwas angehobenen Schiebedeckels 3 auf. In Fig. 12 befindet sich der Führungsstift 54 in dem zweiten Abschnitt 60, d.h. der Schiebedeckel 3 befindet sich in seiner Schließlage. In Fig. 13 befindet sich der Führungsstift 54 in dem vierten Abschnitt 62, d.h. diese Figur zeigt eine Stellung der Teile, die diese bei der Öffnungsverschiebung des Schiebedeckels vom Anfang bis zum Ende der Öffnungsverschiebung einnehmen. Der erste Abschnitt 59 des Führungsschlitzes 57 ist für den Austritt und den Eintritt des Führungsstiftes 54 aus der bzw. in die Führungskulisse 56 vorn geöffnet. In der Stellung des Schiebedeckels 3 gemäß Fig. 11 befindet sich der Führungsstift 54 außerhalb der Führungskulisse 56. Wie noch erläutert werden soll, bewirkt der Eingriff des Führungsstiftes 54 in den Führungsschlitz 57 der Führungskulisse 56 eine erste Phase der Ausstellbewegung bzw. eine zweite Phase der entgegengesetzten Bewegung, d.h. der Einschwenkbewegung.

Weiterhin ist zwischen dem hinteren Führungsschuh 24 und der Führungskulisse 56 ein Steuerhebel 63 vorgesehen, der einerseits an den hinteren Führungsschuh 24 angelenkt ist und andererseits dreh- und verschiebbar mit der Führungskulisse 56 verbunden ist. Dieser Steuerhebel 63 ist auf noch zu beschreibende Weise einer zweiten Phase der Ausstellbewegung bzw. einer ersten Phase der entgegengesetzt gerichteten Einschwenkbewegung zugeordnet, wobei während der Phasen der Wirksamkeit des Steuerhebels 63 der Eingriff zwischen der Führungskulisse 56 und dem Führungsstift 54 aufgehoben ist.

Im gezeigten Ausführungsbeispiel greift der Steuerhebel 63 zu seiner Anlenkung an den hinteren Führungsschuh 24 schwenkbar an den Führungsstift 54 an, wie die Fig. 11 und 14 verdeutlichen. Auf diese Weise ist der Steuerhebel 63 in einer zum Schiebedeckel 3 senkrechten Ebene schwenkbar gelagert. Am anderen Ende des Steuerhebels 63 ist dieser mit einem in die Führungskulisse 56 eingreifenden Führungsvorsprung 64 versehen. Der Führungsvorsprung 64 ist an zwei parallel gegenüberliegenden Seiten abgeflacht und besitzt eine an den beiden Enden abgerundete langgestreckte Gestalt. Bei geschlossenem Schiebedeckel 3, während der Öffnungsverschiebung, der Schließverschiebung, und der von dem Eingriff zwischen dem Führungsschlitz 57 und dem Führungsstift 54 gesteuerten Phasen der Ausstell- und Einschwenkbewegungen befindet sich der Führungsvorsprung 64 in der Ausnehmung 58, deren Formgebung durch die Abmessungen des Führungsvorsprungs 64 und den überlagerten Dreh- und Verschiebebewegungen des Führungsvorsprungs 64 in der Ausnehmung 58 bestimmt ist. Während dieser Verlagerungen des Führungsvorsprungs 64 innerhalb der Ausnehmung 58 befindet sich der Steuerhebel 63 in seinen funktionslosen Bewegungsphasen.

Die Ausnehmung 58 mündet an ihrem vorderen Ende in eine zylindrische Lageröffnung 65 ein, in welcher eine passende am Aussenumfang zylindrische Lagerscheibe 66 permanent angeordnet und drehbar gelagert ist. Die Einpassung der Lagerscheibe 66 in die Lageröffnung 65 ist aber derart, daß sich die Lagerscheibe in ihrer Lageröffnung 65 nicht unbeabsichtigt, d.h. ohne Eingriff mit dem Führungsvorsprung 64, drehen kann. In der Lagerscheibe 66 befindet sich ein diametral gerichteter, an beiden Seiten bis zum Außenumfang der Lagerscheibe 6 durchgehender Schlitz 67 zur passenden unverdrehbaren Aufnahme des Führungsvorsprungs 64 während der zweiten Phase der Ausstellbewegung bzw. der ersten Phase der entgegengesetzt gerichteten Einschwenkbewegung des Schiebedeckels 3.

Am hinteren Ende der Führungskulisse 56 ist eine Blattfeder 68 starr befestigt. Ihr freier nach vorn weisender Arm erstreckt sich parallel und unterhalb der Führungskulisse 56 und ist insgesamt in Richtung der Führungskulisse 56 vorgespannt. Daher liegt die Blattfeder 68 dem Führungsstift 54 unter Federkraft an, sobald dieser am Ende der ersten Phase der Ausstellbewegung aus dem Führungsschlitz 57 austritt. Dadurch wirkt die Blattfeder 68 durch das Systemspiel verursachten Klappergeräuschen entgegen.

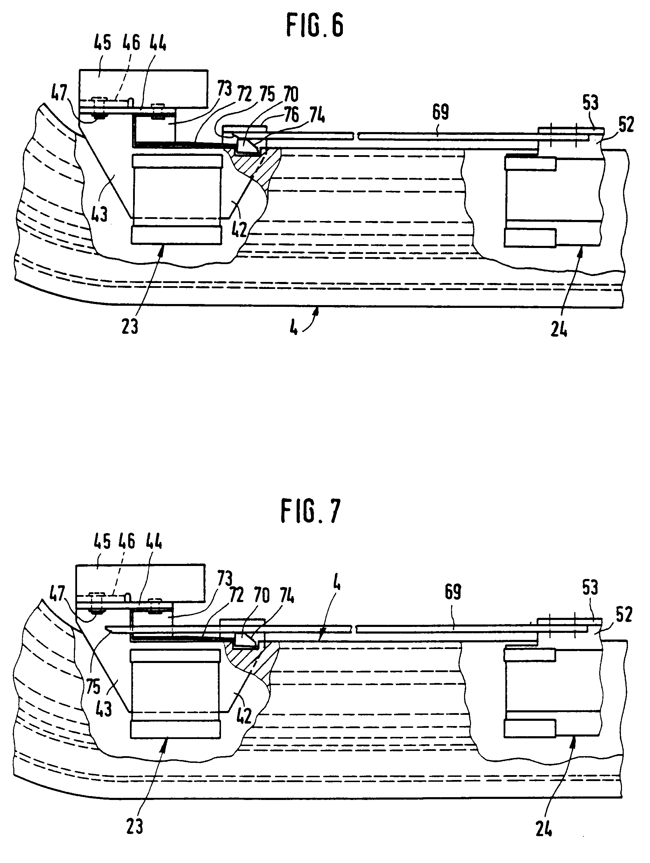

Zur näheren Erläuterung einer Sperrvorrichtung für unerwünschte Verschiebebewegungen des Deckels 3 wird nachfolgend auf die Fig. 6 bis 10 Bezug genommen. Die hier dargestellten Sperrelemente können in Spiegelbildlicher Anordnung auf beiden Seiten der Dachöffnung vorgesehen sein. Sie umfassen einen am hinteren Führungsschuh 24 befestigten und am benachbarten vorderen Führungsschuh 23 verschiebbar geführten Steuerstab 69 sowie ein beweglich am vorderen Führungsschuh 23 angebrachtes, von dem Steuerstab 69 auf noch zu beschreibende Weise betätigtes Rastelement 70, welches einer Rastausnehmung 71 an der Führungsschiene für die Führungsschuhe 23 und 24 zugeordnet ist. Im gezeigten Beispiel befindet sich die Rastausnehmung 71 in der dem Schiebedeckel 3 zugekehrten Fläche des Außenrahmens 4.

Der Steuerstab 69 ist an der Befestigungsleiste 53 der Grundplatte 52 des hinteren Führungsschuhs 24 starr befestigt. Das Rastelement 70 ist schwenkbar am vorderen Führungsschuh 23 befestigt, im gezeigten Beispiel mittels einer Blattfeder 72, durch welche das Rastelement 70 ständig in Richtung des Austretens aus der Rastausnehmung 71 belastet ist. Die Blattfeder 72 ist Bestandteil eines am Lagerschenkel 44 des Schwenklagervorsprungs 43 befestigten Federhalters 73. Das Rastelement 70 weist an seinem dem hinteren Führungsschuh 24 zugekehrten Ende eine Auflaufschräge 74 für das freie Ende des Steuerstabs 69 auf, welche so gerichtet ist, daß das ihr zugeordnete Ende des Steuerstabs 69 das Rastelement 70 in Verlagerungsrichtung auf den Außenrahmen 4 zu belastet. Auch das Ende des Steuerstabs 69 ist mit einer Schrägfläche 75 versehen, die der Auflaufschräge 74 am Rastelement 70 zugeordnet ist und zu dieser parallel ausgerichtet ist.

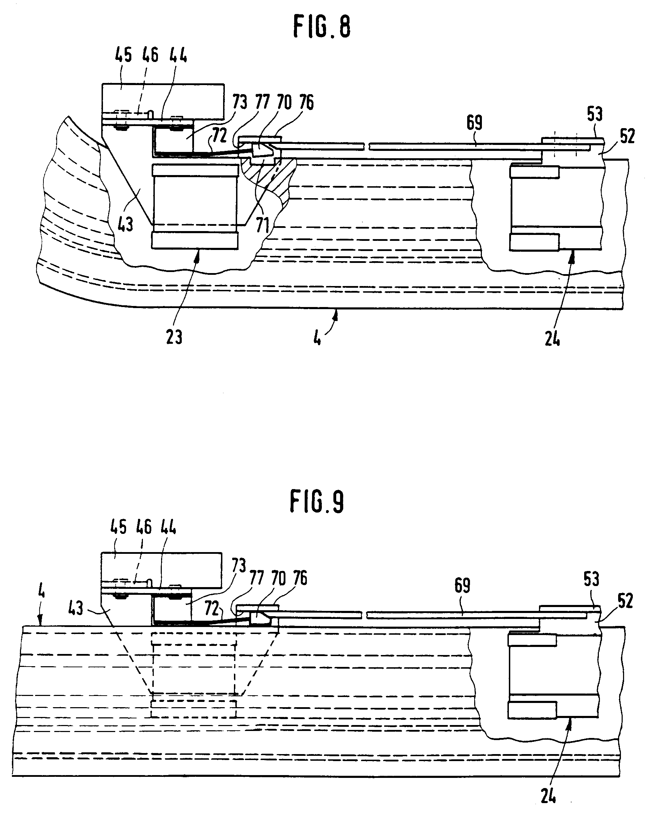

Am hinteren Ende der Grundplatte 42 des vorderen Führungsschuhs 23 befindet sich eine rechtwinklig nach oben abgebogene Aufkantung 76, die innen eine Führungsfläche 77 für den ihr in jeder Schiebedeckelstellung anliegenden Steuerstab 69 bildet. Der Abstand der Führungsfläche 77 zu der benachbarten parallelen Fläche des Außenrahmens 4 ist so gewählt, daß dieser Abstand etwa der Querabmessung des Rastelements 70 entspricht, wie am besten aus Fig. 9 hervorgeht. Das Summenmaß aus dem vorerwähnten Abstand und der Tiefe der Rastausnehmung 71 entspricht etwa der Querabmessung des Rastelements 70 zuzüglich der Dicke des Steuerstabs 69, was die Fig. 6 und 7 verdeutlichen. Bei geschlossenem Schiebedeckel (Fig. 6) befindet sich das Rastelement 70 in der Rastausnehmung 71 und wird darin von dem sich an der Führungsfläche 77 abstützenden Steuerstab 69 gehalten. Auch in ausgestellten Lagen des Schiebedeckels wird das Rastelement 70 durch den Steuerstab 69 in der Rastausnehmung 71 gehalten, wie aus Fig. 7 hervorgeht. Nach Anheben der Hinterkante des Schiebedeckels 3 (Aufsatzschiebehebedach) bzw. nach Absenken der Hinterkante des Schiebedeckels 3 (Schiebehebedach) hat der Steuerstab 69 das Rastelement 70 freigegeben, so daß dieses aus der Rastausnehmung 71 austreten kann, wie Fig. 8 veranschaulicht. Nach Aufhebung der Verrastung kann der Schiebedeckel ausgehend von der in Fig. 8 dargestellten Lage nach hinten verschoben werden. Bei Verschiebung des Schiebedeckels 3 in Richtung seiner Schließlage stützt sich die Schrägfläche 75 des Steuerstabs 69 an der Auflaufschräge 74 des Rastelements 70 ab, kann jedoch das Rastelement 70 nicht verlagern, weil dieses an der zugekehrten Fläche des Außenrahmens 4 gleitet. Dabei kann aber der Steuerstab 69 das Rastelement 70 wegen seiner Anlage an der Führungsfläche 77 auch nicht überfahren. Der durch das Antriebskabel 27 in Schließverschieberichtung angetriebene hintere Führungsschuh 24 verschiebt daher mittels des Steuerstabs 69 den vorderen Führungsschuh 23 und damit den Schiebedeckel 3. Die Schließverschiebung wird auf diese Weise fortgesetzt, bis das Rastelement 70 an der Rastausnehmung 71 angelangt ist und nun von dem Steuerstab 69 in diese hinein verlagert wird.

Wie ersichtlich ist, ist die Länge des Steuerstabs 69 nach Maßgabe des Abstands zwischen dem Rastelement 70 des vorderen Führungsschuhs 23 und dem hinteren Führungsschuh 24 so zu bemessen, daß der Steuerstab 69 das Rastelement 70 zur Öffnungsverschiebung des Schiebedeckels 3 vollständig freigibt (Fig. 8), dem Rastelement 70 bei Schließverschiebung jedoch mit seinem Ende kraftschlüssig anliegt (Fig. 9).

Nachfolgend wird die Wirkungsweise der vorstehend beschriebenen Schiebehebedachkonstruktion näher erläutert. In der Schließstellung des Schiebedeckels 3 (Fig. 6, 12) befindet sich das Rastelement 70 in der Rastausnehmung 71, und der Führungsstift 54 befindet sich in dem zweiten Abschnitt 60 des Führungsschlitzes 57. Soll ausgehend von dieser Schließstellung eine Öffnungsverschiebung des Schiebedeckels 3 erfolgen, so werden durch entsprechende Drehbetätigung des Antriebsritzels 29 (Fig. 15), beispielsweise mittels der in Fig. 1 dargestellten Handkurbel 78, die Antriebskabel 27 so in ihren Führungskanälen 25 und 26 verschoben, daß für die hier betrachtete Deckelseite (Fig. 10) der hintere Führungsschuh 24 nach hinten (nach rechts) verlagert wird. Hierbei verhindert der Steuerstab 69 das Austreten des Rastelements 70 aus der Rastausnehmung 71 so lange, bis der Führungsstift 54 die Hinterkante des Schiebedeckels 3 durch Gleiten im dritten Abschnitt 61 des Führungsschlitzes 57 zum mindestens partiellen Abheben des Schiebedeckels 3 von dem Abdichtprofil 9 nach oben angehoben hat. Bei der Kulissenanordnung gemäß Fig. 13a entspricht dieser Bewegungsablauf bei einem nicht auf die feste Dachfläche aufgesetzten Schiebehebedach der Bewegung des Führungsstiftes 54 in dem Abschnitt 61' des Führungsschlitzes 57'. Hierbei wird der Schiebedeckel 3 mit seiner Hinterkante abgesenkt, um nachfolgend unter die feste Dachfläche verschoben werden zu können.

Bei Fortsetzung des Verschiebeantriebs des hinteren Führungsschuhs 24 in der angegebenen Richtung gelangt der Führungsstift 54 in den vierten Abschnitt 62 des Führungsschlitzes 57, und der Steuerstab 69 gibt das Rastelement 70 frei, so daß dieses aus der Rastausnehmung 71 austreten kann. Der Schiebedeckel ist nunmehr für eine weitere Öffnungsverschiebebewegung freigegeben. Bei der Schließverschiebung erfolgen die beschriebenen Vorgänge in umgekehrter Reihenfolge.

Soll nunmehr der Schiebedeckel 3 ausgehend von seiner Schließstellung (Fig. 6, 12) in eine Lüftungsstellung mit seiner Hinterkante nach oben ausgestellt werden, so werden die Antriebskabel 27 auf die beschriebene Weise in Gegenrichtung verschiebend angetrieben, so daß für die betrachtete Deckelseite (Fig. 10) der hintere Führungsschuh 24 nach vorn (nach links) verschoben wird. Hierbei hält der Steuerstab 69 das Rastelement 70 in der Rastausnehmung 71, wodurch der vordere Führungsschuh 23 und der mit diesem verbundene Schiebedeckel 3 gegen Verschieben gesichert ist. Der Führungsstift 54 gelangt aus dem zweiten Abschnitt 60 in den ersten Abschnitt 59 des Führungsschlitzes 57. Da sich der Führungsstift 54 stets nur auf einer geradlinigen parallel zur durch die Führungsnuten 19 und 20 gebildeten Führungsschiene verlaufenden Bahn bewegen kann, der erste Abschnitt 59 des Führungsschlitzes 57 jedoch schräg verläuft, wird der Schiebedeckel 3 durch die Führungsstifte 54 hinten angehoben. Diese erste Phase der Ausstellbewegung dauert an, bis der Führungsstift 54 am Ende des ersten Abschnitts 59 angelangt ist und aus diesem austritt. Bis zu diesem Zeitpunkt ist der Steuerhebel 63 inaktiv gewesen und wurde durch den Führungsstift 54 lediglich unter zunehmender Verschwenkung im Uhrzeigersinn nach vorn mitgenommen, wobei sein Führungsvorsprung 64 innerhalb der Ausnehmung 58 verlagert wurde. Am Ende dieser Verlagerungsbewegung ist der Führungsvorsprung 64 in den Schlitz 67 der Lagerscheibe 66 eingetreten. Bei Austritt des Führungsstiftes 54 aus dem ersten Abschnitt 59 befindet sich der Führungsvorsprung 64 vollständig in dem Schlitz 67, so daß sich nunmehr für die zweite Phase der Ausstellbewegung der Führungsvorsprung 64 zusammen mit der von ihm drehend mitgenommenen Lagerscheibe 66 in der Lageröffnung 65 drehen kann. Eine weitere Bewegung des Führungsstiftes 54 in der angegebenen Richtung führt nunmehr zu einer weiteren Verschwenkung des den Schiebedeckel 3 ausstellenden Steuerhebels 63, bis etwa die in Fig. 11 dargestellte maximale Ausstellage erreicht ist. Beim Einschwenken des Schiebedeckels erfolgt der beschriebene Bewegungsablauf in umgekehrter Reihenfolge, wobei auch hierbei das Rastelement 70 von dem Steuerstab 69 in der Rastausnehmung 71 zur Sicherung des Schiebedeckels gegen Verschieben festgehalten wird. Beim Verschwenken des Schiebedeckels 3 verschwenkt dieser um die von den Schwenklagerzapfen 47 gebildete Schwenkachse.

Die beschriebene Sonnenschutzplatte 16 ist von den Verschiebebewegungen des Schiebedeckels 3 unabhängig und kann in jeder Stellung des Schiebedeckels 3 unabhängig verschoben werden.

Wie insbesondere die Fig. 11 bis 13 verdeutlichen, wird durch die Anordnung des Steuerhebels 63 mit seinem Drehlager in der Führungskulisse 56 vorteilhaft erreicht, daß ein zum vollständigen Ausstellen der Deckelhinterkante langer Verschiebeweg des hinteren Führungsschuhs 24 in Vorwärtsrichtung und damit verbunden ein langgestreckter geneigter erster Abschnitt eines Führungsschlitzes teilweise ersetzt wird durch eine Hebelausstellung. Dadurch kann der die erste Phase der Ausstellbewegung bewirkende Führungsschlitz 57 erheblich verkürzt ausgebildet werden. Im Ergebnis wird durch diese Anordnung die Abstützung des ausgestellten Schiebedeckels verbessert, weil die hintere Abstützung näher an die Deckelhinterkante heranrückt, wodurch die Abstützbasis auch des voll ausgestellten Schiebedeckels vergleichsweise groß ist.

Bei der beschriebenen Aufsatzschiebehebedachkonstruktion befinden sich alle die Führungsschuhe 23, 24 mit dem Schiebedeckel 3 verbindenden Funktionsteile der Dachkonstruktion zu beiden Seiten der Dachöffnung 2 bei geschlossenem Schiebedeckel jeweils geschützt innerhalb eines Raums, der durch den Außenrahmen 4, der Innenfläche des Schiebedeckels 3, der Aufkantung 8 mit Abdichtprofil 9 und der Oberseite der festen Dachfläche 1 begrenzt ist.

Die Ausstell- oder Hebefunktion der beschriebenen Aufsatzschiebehebedachkonstruktion wird dadurch gewährleistet, daß alle an den Deckelschwenkbewegungen teilnehmenden Funktionsteile, d.h. die Führungskulissen 56, die Steuerhebel 63, die Blattfedern 68 und die Deckelträger 45, 55 nicht über die Seitenränder des Schiebedeckels 3 vorstehen, sondern dahinter zurückspringend angeordnet sind.

## Patentansprüche

1. Schiebehebedach für Kraftfahrzeuge, mit einem starren Schiebedeckel (3), der mit vorderen und hinteren Führungsschuhen (23, 24) an zeitlich an der Dachöffnung befestigten Führungsschienen geführt, durch an die hinteren Führungsschuhe (24) angreifende drucksteif geführte Kabel (27) angetrieben, über an den vorderen Führungsschuhen (23) angebrachte Schwenklager (47) um eine waagerechte, quer zur Schieberichtung verlaufende Achse schwenkbar gelagert und längs seiner Seitenkanten mit an ihm befestigten Führungskulissen (56) ausgestattet ist, in deren Führungsschlitze (57) mit den hinteren Führungsschuhen (24) verbundene Führungsstifte (54) eingreifen, wobei die Führungsschlitze (57) jeweils aus einem gegenüber dem Schiebedeckel (3) von vorn nach hinten ansteigenden der Ausstellbewegung zugeordneten ersten geradlinigen Abschnitt (59), einem daran anschließenden nach hinten gerichteten etwa parallel zum Schiebedeckel (3) verlaufenden der Schließlage des Schiebedeckels zugeordneten zweiten Abschnitt (60) und einem daran anschließenden schräg gerichteten einer vertikalen Verlagerung der Deckelhinterkante zugeordneten dritten Abschnitt (61) zusammengesetzt sind, und die hinteren Führungsschuhe (24) mit den ihnen zugeordneten Führungskulissen (56) jeweils über einen Steuerhebel (63) verbunden sind, der einerseits an den hinteren Führungsschuh (24) angelenkt ist und andererseits dreh- und verschiebbar mit der Führungskulisse (56) verbunden ist, wobei eine erste Phase der Ausstellbewegung bzw. eine zweite Phase der entgegengesetzten Bewegung durch den Eingriff zwischen den Führungskulissen (56) und den Führungsstiften (54) und eine zweite Phase der Ausstellbewegung bzw. eine erste Phase der entgegengesetzten Bewegung durch die Steuerhebel (63) bei hierbei aufgehobenem Eingriff zwischen den Führungskulissen (56) und den Führungsstiften (54) gesteuert ist, **dadurch gekennzeichnet**, daß die Führungsstifte (54) zur Bewegung auf geradlinigen parallel zu den Führungsschienen verlaufenden Bahnen an den hinteren Führungsschuhen (24) befestigt sind, daß die Steuerhebel (63) zur Anlenkung an die hinteren Führungsschuhe (24) jeweils schwenkbar an einen Führungsstift (54) angreifen, und daß die Steuerhebel (63) für ihre Verbindung mit den Führungskulissen (56) jeweils einen Führungsvorsprung (64) aufweisen, der in eine dem Führungsschlitz (57) der zugehörigen Führungskulisse (56) benachbarte langgestreckte Ausnehmung (58) der Führungskulisse (56) verschiebbar eingreift, wobei die Ausnehmung (58) an ihrem vorderen Ende in eine zylindrische Lageröffnung (65) einmündet, in welcher eine passende am Außenumfang zylindrische Lagerscheibe (66) drehbar gelagert ist, die einen diametral gerichteten mindestens an einer Seite bis zum Außenumfang durchgehenden Schlitz (67) zur innerhalb der Lagerscheibe (66) unverdrehbaren Aufnahme des Führungsvorsprungs (64) aufweist, der zusammen mit der Lagerscheibe (66) in der Lageröffnung (65) drehbar ist.

2. Schiebehebedach nach Anspruch 1, **dadurch gekennzeichnet**, daß der Führungsvorsprung (64) wenigstens einseitig zur Anlage an eine Wandfläche des Schlitzes (67) abgeflacht ist.

3. Schiebehebedach nach Anspruch 1 oder 2, **dadurch gekennzeichnet**, daß der erste Abschnitt (59) des Führungsschlitzes (57) für den Austritt und den Eintritt des Führungsstiftes (54) aus der bzw. in die Führungskulisse (56) vorn geöffnet ist.

4. Schiebehebedach nach einem der Ansprüche 1 bis 3, **dadurch gekennzeichnet**, daß am hinteren Ende der Führungskulisse (56) eine Blattfeder (68) starr befestigt ist, die mit ihrem freien nach vorn weisenden Arm dem aus dem ersten Abschnitt (59) des Führungsschlitzes (57) austretenden Führungsstift (54) unter Federkraft anliegt.

## Claims

1. Sliding-lifting roof for automobiles, comprising a rigid sliding lid (3), which is guided by forward and rear guide shoes (23, 24) on guide rails fixed laterally to the roof opening, is driven by cables (27) guided in pressure-stiff manner and acting on the rear guide shoes (24), is pivotally journalled by pivot bearings (47) fitted to the forward guide shoes (23) about a horizontal axis extending transversely to the direction of sliding and is equipped, along its lateral edges, with guide blocks (56) fixed to it, in the guide slits (57) of which guide pins (54) connected to the rear guide shoes (24) engage, wherein the guide slits (57) are each composed of a first rectilinear portion (59), ascending from front to rear relative to the sliding lid (3) and associated with the outward tilting movement, of a second portion (60), adjoining thereto and extending towards the rear approximately parallel to the sliding lid (3) and associated with the closed position of the sliding lid, and of an obliquely orientated third portion (61) adjoining thereto and associated with a vertical displacement of the rear edge of the lid, and the rear guide shoes (24) are each connected to the guide blocks (56) associated with them, each by a control lever (63), which on the one hand is articulated to the rear guide shoe (24) and on the other hand is connected rotatably and slidably to the guide block (56), a first phase of the outward tilting movement and a second phase of the opposite movement being controlled by the engagement between the guide blocks (56) and the guide pins (54), and a second phase of the outward tilting movement and first phase of the opposite movement being controlled by the control levers (63), the engagement between the guide blocks (56) and the guide pins (54) then being cancel led, characterized in that the guide pins (54) are fixed to the rear guide shoes (24) for movement upon rectilinear tracks running parallel to the guide rails, that the control levers (63) each act pivotally on a guide pin (54) for articulation to the rear guide shoes (24), and that the control levers (63), for their connection to the guide blocks (56), each possess a guide projection (64), which engages slidably into an elongate aperture (58) of the associated guide block (56) adjacent to the guide slit (57) of that guide block (56), the recess (58) leading out at its forward end into a cylindrical bearing opening (65), in which is rotatably journalled a fitting bearing disc (66), cylindrical at its outer circumference, which has a diametrally orientated slit (67) extending at least at one end to the outer circumference, for the non-rotatable seating within the bearing disc (66) of the guide projection (64), which is rotatably journalled together with the bearing disc (66) in the bearing opening (65).

2. Sliding-lifting roof according to claim 1, characterized in that the guide projection (64) is flattened on at least one side for bearing against a wall face of the slit (67).

3. Sliding-lifting roof according to claim 1 or 2, characterized in that the first portion (59) of the guide slit (57) is forwardly open for the exit and entry of the guide pin (54) out of and into the guide block (56).

4. Sliding-lifting roof according to one of claims 1 to 3, characterized in that a leaf spring (68) is rigidly fixed to the rear end of the guide block (56), which (leaf spring) bears with spring force with its free, forwardly pointing arm against the guide pin (54) as it leaves the first portion (59) of the guide slit (57).

## Revendications

1. Toit ouvrant coulissant et relevable pour véhicules automobiles, comprenant une trappe coulissante rigide (3) qui est guidée par des patins de guidage avant et arrière (23, 24) le long de rails de guidage fixés latéralement à l'ouverture du toit, entraînée par des câbles (27) guidés rigidement à la pression, qui attaquent les patins de guidage arrière (24), montée pour pouvoir pivoter autour d'un axe horizontal s'étendant transversalement à la direction de la translation au moyen de paliers de pivotement (47) agencés sur les patins de guidage avant (23), et équipée, le long de ses bords latéraux, de coulisses de guidage (56) fixées à cette trappe, dans les fentes de guidage (57) desquelles sont engagés des doigts de guidage (54) solidaires des patins de guidage arrière (24), les fentes de guidage (57) étant composées chacune d'un premier segment rectiligne (59) associé au mouvement de projection, qui monte de l'avant vers l'arrière par rapport à la trappe coulissante (3), d'un deuxième segment (60), qui s'y raccorde, est dirigé vers l'arrière, s'étend à peu près parallèlement à la trappe coulissante (3) et est associe à la position de fermeture de la trappe coulissante, et d'un troisième segment (61) qui s'y raccorde, est orienté obliquement et est associé à un déplacement vertical du bord arrière de la trappe, et les patins de guidage arrière (24) sont reliés aux coulisses de guidage (56) qui leur sont associées, chacun par l'intermédiaire d'un levier de commande (63) qui, d'une part, est articulé au patin de guidage arrière (24) et, d'autre part, est relié à la coulisse de guidage (56) par une liaison mobile en rotation et en translation, une première phase du mouvement de projection, ou une deuxième phase du mouvement opposé, étant commandée par la prise entre les coulisses de guidage (56) et les voies de guidage (54), et une deuxième phase du mouvement de projection, ou une première phase du mouvement opposé, étant commandée par les leviers de commande (63), alors que la prise entre les coulisses de guidage (56) et les doigts de guidage (54) est supprimée à ce moment, caractérisé en ce que, pour le déplacement sur des voies rectilignes, s'étendant parallèlement aux rails de guidage, les doigts de guidage (54) sont fixés aux patins de guidage arrière (24), en ce que les leviers de commande (63) servant à l'articulation sur les patins de guidage arrière (24) attaquent chacun un doigt de guidage (54) de façon pivotante et en ce que, pour leur liaison avec les coulisses de guidage (56), les leviers de commande (63) présentent chacun une saillie de guidage (64) qui est engagée mobile en translation, dans un évidement (58) de la coulisse de guidage (56), allongée, voisine de la fente de guidage (57) de la coulisse de guidage (56) correspondante, cependant que l'évidement (58) débouche, à son extrémité avant, dans une ouverture d'articulation cylindrique (65) dans laquelle est montée rotative une rondelle de palier ajustée (66) cylindrique sur sa périphérie extérieure, qui présente une fente (67) orientée diamétralement, qui se prolonge au moins sur un côté jusqu'à la périphérie extérieure, pour recevoir la saillie de guidage (64) de façon bloquée en rotation à l'intérieur de la rondelle de palier (66), saillie qui est montée pour tourner dans l'ouverture de palier (65) conjointement avec la rondelle de palier (66).

2. Toit ouvrant coulissant et relevable selon la revendication 1, caractérisé en ce que la saillie de guidage (64) est aplatie au moins d'un côté pour s'appuyer contre une surface de paroi de la fente (67).

3. Toit ouvrant coulissant et relevable selon la revendication 1 ou 2, caractérisé en ce que le premier segment (59) de la fente de guidage (57) est ouvert vers l'avant pour permettre au doigt de guidage (54) de sortir de la coulisse de guidage (56) et d'entrer dans cette coulisse.

4. Toit ouvrant coulissant et relevable selon une des revendications 1 à 3, caractérisé en ce qu'à l'extrémité arrière de la coulisse de guidage (56), est fixé rigidement un ressort lame (68) dont le bras libre dirigé vers l'avant est appuyé avec une force élastique contre le doigt de guidage (54) qui émerge du premier segment (59) de la fente de guidage (57).
